Europäisches Patentamt

**European Patent Office**

Office européen des brevets

(11) Numéro de publication: **0 030 201**
A1

(12) **DEMANDE DE BREVET EUROPEEN**

(21) Numéro de dépôt: 80420110.1

(22) Date de dépôt: 10.10.80

(51) Int. Cl.³: **B 01 D 21/02**

(30) Priorité: 10.10.79 ES 484898

(43) Date de publication de la demande:
10.06.81 Bulletin 81/23

(84) Etats Contractants Désignés:
AT BE CH DE FR GB IT LI LU NL SE

(71) Demandeur: Sanchez Martinez, Antonio
c/o Azacaya No 8 Carretera Beniajan KM 3
Murcia(ES)

(72) Inventeur: Sanchez Martinez, Antonio
c/o Azacaya No 8 Carretera Beniajan KM 3
Murcia(ES)

(74) Mandataire: Laurent, Michel et al,
Bureaux Chalin A1 20, rue Louis Chirpaz Boîte Postale 32
F-69130 Lyon-Ecully(FR)

(54) Réservoir décantateur d'impuretés pour combustibles.

(57) Réservoir permettant d'obtenir une décantation des impuretés que peuvent contenir les combustibles.

Ce réservoir comporte une pluralité de compartiments (1), (2), (3), (4), (5), (6), (7), qui communiquent entre eux par des ouvertures de passage permettant la circulation du combustible, ouvertures dont la section diminue progressivement dans le sens de circulation, les ouvertures de remplissage et d'évacuation se trouvant, dans chaque compartiment, disposées à des niveaux différents. Il comporte en outre un bac à latéral (10) formant le compartiment d'introduction pour le combustible et, disposé dans la partie supérieure, un bac (11) lui-même subdivisé par une cloison horizontale intermédiaire (16) en deux chambres (17), (18) qui communiquent entre elles par une série d'orifices à l'intérieur desquels sont montés des filtres (19).

FIG. 1

- 1 -

# RESERVOIR DECANTATEUR D'IMPURETES POUR COMBUSTIBLES

La présente invention concerne des perfectionnements apportés aux réservoirs pour combustibles afin d'obtenir une décantation des impuretés que peuvent contenir lesdits combustibles.

Dans la suite de la description, ce type de réservoir sera désigné par l'expression "réservoir décantateur".

Plus particulièrement, l'invention concerne des perfectionnements apportés aux réservoirs décantateurs du type de ceux décrits dans la demande de brevet espagnol n° 479 872 au nom du Demandeur.

D'une manière générale, les réservoirs décantateurs du type de ceux décrits dans le brevet espagnol précité sont constitués d'une cuve (ou bac) subdivisé à l'intérieur au moyen de cloisons permettant ainsi d'obtenir une série de compartiments disposés à des niveaux différents. Ces compartiments peuvent être équipés ou non, à l'intérieur, d'ailettes déflectrices. Par ailleurs, lesdits compartiments ainsi formés communiquent successivement entre eux.

Le premier et le dernier compartiment formés dans le réservoir comportent des ouvertures de communication avec l'extérieur servant au remplissage des réservoirs et à l'évacuation du combustible après décantation.

La communication entre les divers compartiments est réalisée par l'intermédiaire d'ouvertures dont la section diminue progressivement dans le sens de circulation du combustible. En outre, les ouvertures de remplissage et d'évacuation se trouvent, dans chaque compartiment, disposées à des niveaux différents afin de retenir les impuretés présentes dans le combustible.

Les compartiments de l'étage inférieur comportent, près du fond, des soupapes d'évacuation pour l'élimination de l'eau et autres impuretés. Les compartiments de l'étage supérieur comportent des soupapes pour l'évacuation de l'air.

Ce type de réservoir donne satisfaction mais, dans certains cas, il se peut que quelques impuretés soient encore présentes dans le combustible lors de son utilisation.

La présente invention vise à surmonter cet inconvénient et concerne des perfectionnements apportés au type de réservoir précité, permettant d'obtenir une pureté pratiquement parfaite du combustible en vue de son utilisation, par exemple pour alimenter un moteur.

D'une manière générale, l'invention concerne donc des perfectionnements apportés aux réservoirs du type de ceux décrits dans la demande de brevet espagnol n⁰ 479 872, perfectionnements qui se caractérisent en ce que ces réservoirs comportent en outre deux compartiments (ou bacs) supplémentaires, l'un disposé latéralement formant le compartiment d'introduction pour le combustible et l'autre, disposé dans la partie supérieure formant le compartiment de sortie du combustible après purification.

Dans la suite de la description, le terme "bac" sera utilisé pour désigner les compartiments précités.

Le bac latéral d'introduction comporte un orifice supérieur pour l'amenée du combustible, un orifice inférieur pour le drainage des impuretés et un orifice intermédiaire, situé dans la moitié supérieure, permettant de communiquer avec le compartiment suivant. Ce bac latéral est également équipé d'un niveau extérieur où se trouve logé un flotteur qui peut flotter dans l'eau mais pas dans le combustible. De cette manière, en fonction de la hauteur du flotteur, on peut déterminer la quantité d'impuretés ou d'eau contenue dans le bac latéral.

Le bac de sortie comporte un orifice inférieur lui permettant de communiquer avec le compartiment qui le précède, ainsi qu'un orifice supérieur permettant l'évacuation du combustible.

Par ailleurs, le bac supérieur est également subdivisé par une cloison horizontale intermédiaire, de manière à avoir deux compartiments ou chambres, l'une inférieure et l'autre supérieure. Ces deux chambres communiquent entre elles par une série d'orifices réalisés dans la cloison intermédiaire de séparation. Dans chacun de ces ori-

.../

fices est monté un filtre à travers lequel le combustible doit passer pour arriver à la chambre supérieure,
chambre de laquelle part le conduit de sortie du combustible.

La sortie des filtres dans la chambre supérieure se
trouve située à un niveau supérieur à celui de la prise
pour la sortie du combustible. De cette façon, en cas de
mauvais fonctionnement de l'installation entraînant une
introduction d'air, cet air restera dans la partie supérieure de la chambre où s'effectue la sortie du combustible. Etant donné la pression du dispositif permettant
d'entraîner le combustible, l'air peut être expulsé par
une soupape de sécurité montée dans le plafond de la
chambre supérieure. On élimine ainsi le risque que l'air
puisse arriver aux injecteurs du moteur.

La soupape de sécurité précitée fonctionnera même
s'il y a un risque de pression dans le réservoir. L'excès
de combustible qui pourrait sortir par le soupape de sécurité retourne au réservoir général de service.

Un tel réservoir peut en outre être équipé d'éléments
accessoires tels que manomètre indicateur de pression ou
service à la pompe d'injection et manomètre indiquant la
pression commandant la pompe d'alimentation. La différence de pression entre les deux manomètres sera dûe à la
chute de pression provoquée par les impuretés déposées
dans les éléments filtrants.

Les filtres disposés entre la chambre supérieure et
la chambre inférieure sont moins hauts que la chambre
supérieure et sont entourés d'une paroi allant du plafond
au plancher de ladite chambre. Cette paroi présente des
orifices de passage dans la chambre supérieure, ces orifices étant placés au-dessus du plafond des filtres afin
de permettre la décantation des impuretés que le combustible pourrait entraîner.

Les améliorations faisant l'objet de la présente invention permetttent, comme dit précédemment, d'augmenter
les garanties de pureté du combustible à son arrivée au

.../

- 4 -

moteur et, par suite, assurent une plus grande sécurité de fonctionnement.

L'invention et les avantages qu'elle apporte seront cependant mieux compris grâce à l'exemple de réalisation, donné ci-après à titre illustratif mais non limitatif, et qui est illustré par les schémas annexés dans lesquels :

- la figure 1 est une coupe verticale d'un réservoir réalisé conformément à la présente invention,

- la figure 2 est une coupe verticale partielle, à plus grande échelle, de la chambre supérieure,

- la figure 3 est une vue de dessus d'un tel réservoir.

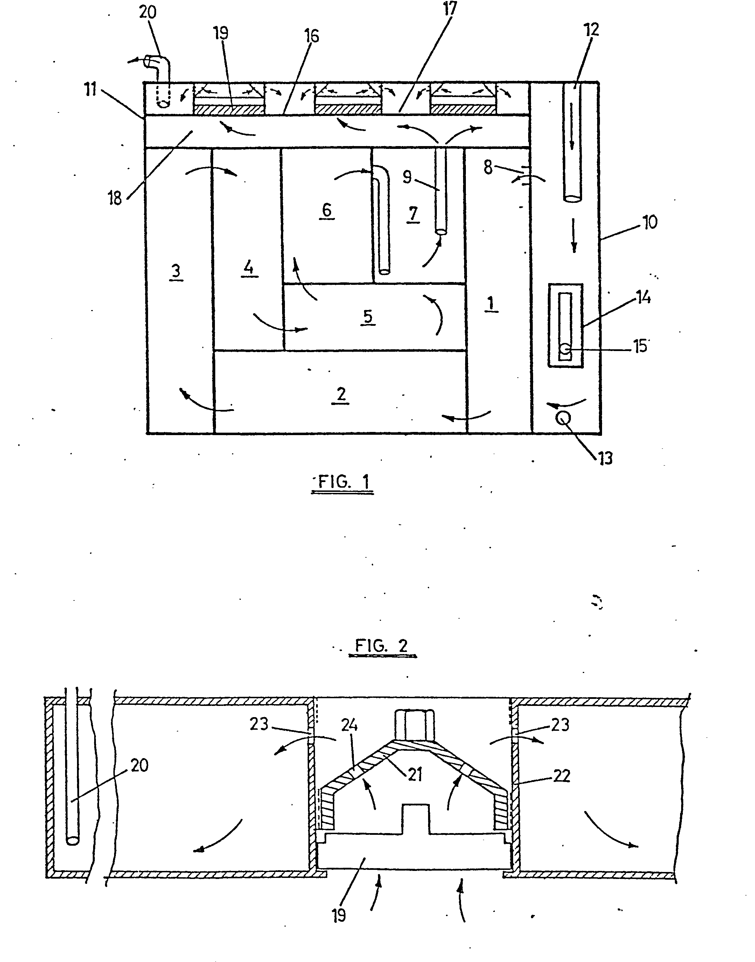

Ainsi que cela est illustré sur les schémas annexés et plus particulièrement à la figure 1, le réservoir conforme à l'invention est constitué par une pluralité de compartiments 1, 2, 3, 4, 5, 6, 7 qui communiquent tous entre eux par des ouvertures de passage correspondantes, non représentées à la figure 1 par mesure de simplification mais schématisées par les flèches montrant la circulation du combustible à l'intérieur du réservoir. Par ailleurs, le compartiment 1 comporte un orifice supérieur 8 et le compartiment 7 un conduit de sortie 9. Cet ensemble de compartiments 1, 2, 3, 4, 5, 6, 7 correspond, d'une manière générale, au réservoir faisant l'objet de la demande de brevet espagnol nº 479 872, l'orifice 8 du présent dispositif correspondant à l'orifice d'introduction dans le dispositif faisant l'objet du brevet précité et, le conduit de sortie 9 correspondant à la sortie du combustible vers le moteur.

Conformément à la présente invention, le réservoir comporte en outre un bac latéral 10 et un bac supérieur 11. Le bac latéral 10 est muni d'un orifice et d'un conduit d'entrée 12 pour introduire le combustible, d'un orifice inférieur 13 permettant le drainage du bac 10, pour l'élimination des impuretés et d'un orifice intermédiaire 8 permettant de communiquer avec le compartiment 1. De plus, ce bac 10 comprend un niveau 14 équipé d'un flotteur 15

.../

qui est susceptible de flotter dans l'eau mais pas dans le combustible. De cette façon, en voyant la hauteur à laquelle se trouve le flotteur 11, on peut connaître le niveau d'eau et d'impuretés contenu dans le bac 10.

Le bac supérieur 11 est lui-même subdivisé par une cloison horizontale intermédiaire 16 en deux chambres, l'une supérieure 17 et l'autre inférieure 18 qui communiquent entre elles par une série d'orifices, un filtre 19 étant étant monté dans chacun de ces orifices.

Le combustible arrive à la chambre inférieure 18 par le conduit 9 du compartiment 7 et passe dans la chambre 17 par les filtres 19 pour ressortir à l'extérieur par le conduit 20.

Comme on peut mieux le voir à la figure 2, le filtre 19 et son couvercle 21 sont entourés par la paroi 22 présentant des ouvertures 23 pour le passage du combustible, ces ouvertures 23 se trouvant au-dessus des ouvertures 24 de sortie du combustible du filtre. De cette manière, les impuretés éventuelles qu'entraînerait encore le combustible peuvent rester déposées sur le couvre-filtre 21.

Les ouvertures de passage 23 se trouvent à un niveau supérieur au niveau de l'orifice de prise du conduit de sortie 20. De cette façon, si de l'air arrivait à la chambre supérieure 17, il se trouverait à la partie supérieure de ladite chambre et ne sortirait pas par le conduit 20. L'air serait expulsé de ladite chambre 17 par la soupape de sécurité 25 prévue au plafond de la chambre 17. Le couvercle 21 peut être fixé à la paroi 22, par exemple, par filetage et le compartiment défini par ladite paroi 21 peut être également fermé par un couvercle fileté.

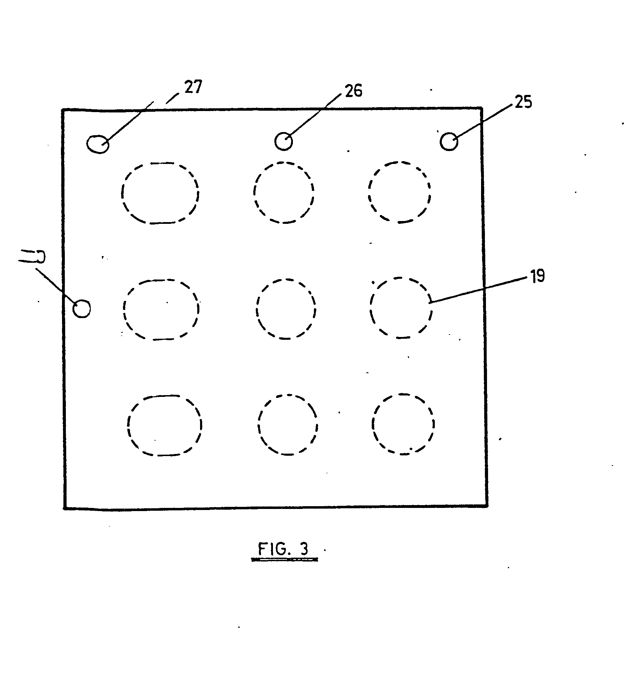

Comme on peut le voir à la figure 3, la chambre supérieure 17 présente en plus de la soupape de sécurité 25, un manomètre 26, indicateur de pression ou service à la pompe d'injection et un manomètre 27 qui indique la pression commandée par la pompe d'alimentation.

La circulation dans les différentes chambres, entre le bac 10 et le bac 11 s'effectue, tel que cela est repré-

.../

senté par les flèches, grâce à des orifices (non représentés) situés à des niveaux différents pour la retenue des impuretés, ces chambres pouvant comporter des conduits de drainage pour l'évacuation des impuretés.

Bien entendu, l'invention n'est pas limitée à l'exemple de réalisation décrit précédemment mais elle en couvre toutes les variantes réalisées dans le même esprit.

Ainsi, bien que cela ne soit pas représenté dans les schémas annexés, des ailettes déflectrices peuvent être disposées à l'intérieur des compartiments, par exemple des compartiments 1, 2, 3, ces ailettes étant disposées horizontalement dans les compartiments 1 et 3 et verticalement dans le compartiment 4 et s'étendant sur une partie de la hauteur de ces compartiments à la manière de chicanes.

## REVENDICATIONS

1/ Réservoir décantateur d'impuretés pour combustibles, du type comportant une cuve subdivisée intérieurement au moyen de cloisons en une série de compartiments (1),(2), (3), (4), (5), (6), (7), disposés à différents niveaux, pourvuséventuellement intérieurement d'ailettes déflectrices, ces compartiments communiquant entre eux successivement par l'intermédaire d'ouvertures, dont la section diminue progressivement dans le sens de circulation du combustible, les ouvertures d'introduction et de sortie du combustible se trouvant dans chaque compartiment à un niveau différent pour retenir les impuretés contenues dans ledit combustible, caractérisé par le fait qu'il comporte en outre un bac latéral (10) formant le compartiment d'introduction pour le combustible et un compartiment (11) disposé dans la partie supérieure, formant le compartiment de sortie,

- ledit bac latéral d'entrée(10) comportant un orifice supérieur(12) pour l'introduction ou l'entrée du combustible, un orifice inférieur (13) pour le drainage des impuretés et un orifice intermédiaire (8) situé dans la moitié supérieure permettant de communiquer avec le compartiment suivant (1) ainsi qu'un niveau (14) renfermant un flotteur (15) susceptible de flotter dans l'eau mais non dans le combustible,

- et ledit bac de sortie (11) comportant un orifice inférieur (9) communiquant avec le compartiment (7) situé immédiatement avant lui ainsi qu'un orifice supérieur (20) permettant la sortie du combustible, ce bac supérieur (11) de sortie étant par ailleurs subdivisé au moyen d'une cloison horizontale intermédiaire (13), en deux chambres (17), (18), l'une inférieure (18) et l'autre supérieure (17), communiquant entre elles par une série d'orifices pratiqués dans la cloison intermédiaire (16), un filtre (19) étant monté dans chacun de ces orifices.

2/ Réservoir décantateur selon la revendication 1, caractérisé par le fait que la sortie (24) des filtres

(19) dans la chambre supérieure (17) se trouve  à un niveau supérieur au niveau de la prise (20) pour la sortie du combustible de ladite chambre.

3/ Réservoir décantateur selon l'une des revendications 1 et 2, caractérisé par le fait que les filtres (19) sont moins haut que la chambre supérieure (17) et sont entourés d'une paroi (22) allant du plafond au plancher de ladite chambre, ladite paroi (22) présentant des orifices (23) de passage vers ladite chambre qui sont situés au-dessus des filtres (19).

FIG. 1

FIG. 2

FIG. 3

))) Office européen
des brevets

**RAPPORT DE RECHERCHE ÉUROPEENNE**

Numéro de la demande

EP 80 42 0110.1

| Catégorie | Citation du document avec indication, en cas de besoin, des parties pertinentes | Revendication concernée |
|---|---|---|
| | **DOCUMENTS CONSIDERES COMME PERTINENTS** | |
| | FR - A1 - 2 390 190 (H.J. ANKERSMIT) <br> * fig. 1, 2 * <br><br> -- | 1-3 |
| | US - A - 4 134 833 (D.J. McCORMICK) <br> * fig. 1 à 3 * <br><br> -- | 1 |
| A | FR - A - 2 206 836 (K. KONAGAI et al.) <br> * fig. * <br><br> -- | |
| A | US - A - 4 159 949 (E.F. ODEN) <br> * revendication 1 * <br><br> ---- | |

**CLASSEMENT DE LA DEMANDE (Int. Cl.3)**

B 01 D 21/02

**DOMAINES TECHNIQUES RECHERCHES (Int. Cl.3)**

B 01 D 21/00
B 01 D 21/02
B 65 D 88/00
B 65 D 88/02
F 23 K   5/00

**CATEGORIE DES DOCUMENTS CITES**

X: particulièrement pertinent
A: arrière-plan technologique
O: divulgation non-écrite
P: document intercalaire
T: théorie ou principe à la base
    de l'invention
E: demande faisant interférence
D: document cité dans
    la demande
L: document cité pour d'autres
    raisons

&: membre de la même famille,
    document correspondant

X Le présent rapport de recherche a été établi pour toutes les revendications

| Lieu de la recherche | Date d'achèvement de la recherche | Examinateur |
|---|---|---|
| Berlin | 09-03-1981 | KÜHN |

OEB Form 1503.1   06.78